# EUROPEAN PATENT APPLICATION

(11) **EP 1 387 475 A1**
(43) Date of publication of application: **04.02.2004**
(21) Application number: 02425506.9
(22) Date of filing: 01.08.2002
(51) Int. Cl.: H02M 1/12, H02M 3/156

(54) **Circuit for the programmable protection of output overvoltages in a power factor corrector**

(71) Applicant: STMicroelectronics S.r.l., 20041 Agrate Brianza (Milano) (IT)
(72) Inventor: Pidutti, Albino, 33100 Udine (IT); Beria, Stefano, 27100 Pavia (IT)
(74) Representative: Mittler, Enrico

(57) **Abstract**

The present invention refers to a switching power supply, in particular to a power factor corrector (PFC), and more particularly to a circuit for the programmable protection of output overvoltages. It also refers to a power factor corrector integrated circuit comprising a circuit for the programmable protection of output overvoltages.

In one embodiment the circuit for the programmable protection of output overvoltages in a power factor corrector comprises means (R1, R2) for detecting a signal proportional to the output voltage; a first preset reference voltage (Vref1); a second preset reference voltage (Vref2); a transconductance amplifier (18) which receives in input said signal proportional to the output voltage and said first preset reference voltage (Vref1); a comparator (21) which receives in input said signal proportional to the output voltage and said second preset reference voltage (Vref2); means (Rint) suitable for absorbing a current coming from said signal proportional to the output voltage.

## Description

The present invention refers to a switching power supply, in particular a power factor corrector (PFC), and more particularly to a circuit for the programmable protection of output overvoltages. In addition it refers to a power factor corrector integrated circuit comprising a circuit for the programmable protection of output overvoltages.

A power supply consisting of a whole wave rectifier bridge and a filter capacitor connected immediately downstream produces a non-regulated direct voltage starting from the network sinusoid alternating voltage. The filter capacitor's capacity is big enough that at its leads there is a relatively small ripple compared to the direct level. The rectifier diodes of the bridge therefore will conduct network voltage only for a small portion of each half cycle, given that the instantaneous value of this is lower than the voltage on the filter capacitor for the majority of the cycle. It follows then that the current absorbed by the network will consist of a series of sharp pulses whose width is 5-10 times the average resulting value.

This presents considerable consequences: in regard to the case of absorption of sinusoid current, the current absorbed by the line has much greater peak values and effectiveness and the network voltage is distorted by effect of the pulse absorption.

Using switching power supplies and a power factor corrector, positioned between the rectifier bridge and the filter capacitor, a nearly sinusoidal current will be absorbed from the network, in phase with the voltage, making the power factor near 1 and reducing the Total Harmonic Distortion (THD).

Usually the switching configuration called boost is used, which generates a direct voltage that is greater than the maximum network peak voltage, typically 400V for systems powered with European network or with universal power.

The power factor corrector comprises a control ring which, starting from information relating to the output voltage (Vout), regulates the ignition or turning off of a power transistor whose function is substantially that of a switch.

The analysis of the band of the control loop shows the presence of a cutoff frequency with a very low value, a fact that inevitably leads to definitely slow controller reply times.

This characteristic of the loop is however absolutely necessary to prevent the output voltage from being able to follow the sinusoidal pattern of the rectified network voltage, no longer supplying, as a consequence, a nearly direct voltage.

Nevertheless, there are situations in which the reduced width of the band constitutes an important limit that may lead to several components of the circuit being damaged.

Let us presume, in fact, that a sudden load variation occurs, such that the current requested passes, for example, from 100% to 10% or less.

For the reason given previously, the controller is not capable of adjusting in a sufficiently short time to the new operating conditions, therefore an over-voltage is generated on the output node which if it reached values that are too high could damage the discrete components of the preregulator stage, in particular the power transistor and the filter capacitor.

Therefore a protection circuit is necessary against the output overvoltages, which enables the external power transistor to be turned off until particular preset operating conditions are reached.

In view of the state of the technique described, the scope of the present invention is to provide for a circuit for the programmable protection of output overvoltages.

In accordance with the present invention, this scope is reached by means of a circuit for the programmable protection of output overvoltages in a power factor corrector comprising means for detecting a signal that is proportional to the output voltage; a first preset reference voltage; a second preset reference voltage; a transconductance amplifier that receives in input said signal proportional to the output voltage and said first preset reference voltage; a comparator that receives in input said signal proportional to the output voltage and said second preset reference voltage; means suitable for absorbing a current coming from said signal proportional to the output voltage.

In accordance with the present invention, said scope is also reached by means of a power factor corrector integrated circuit comprising a circuit for the programmable protection of output overvoltages in accordance with claim 1.

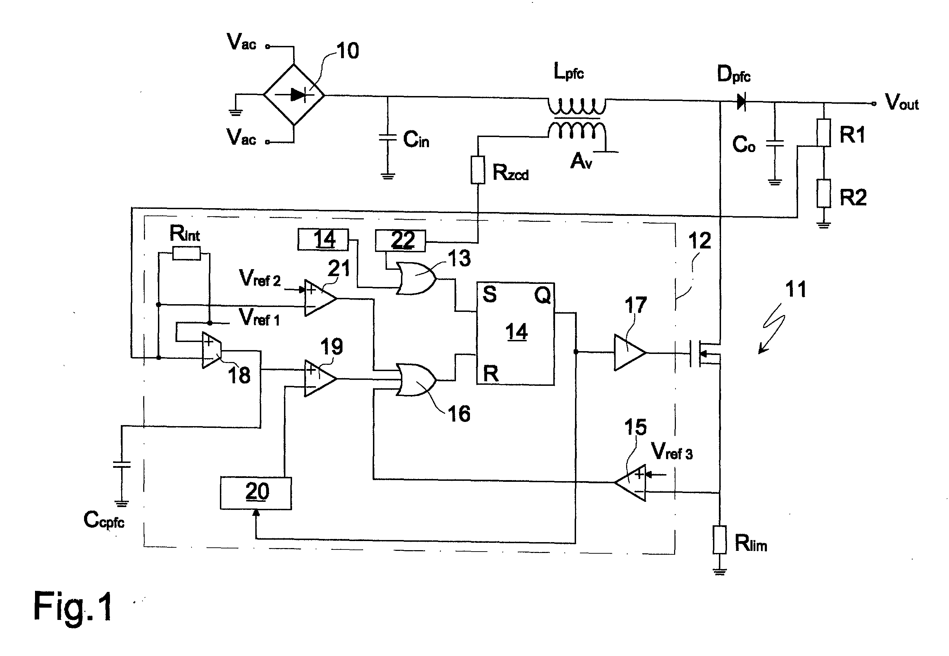

The characteristics and advantages of the present invention will be evident from the following detailed description of an embodiment thereof, illustrated as non-limiting example in the enclosed drawing which shows a switching power supply with a power factor corrector (PFC) comprising a circuit for the programmable protection of output overvoltages in accordance with the present invention.

The switching power supply comprises a bridge of diodes 10 connected to the Vac electricity network, a capacitor Cin connected between the output of the bridge of diodes 10 and ground, an inductance Lpfc connected between the output of the bridge of diodes 10 and the anode of a rectifier diode Dpfc, a capacitor Co connected between the cathode of the rectifier diode Dpfc and ground. The voltage Vout present on the capacitor Co represents the output voltage of the switching power supply. A transistor 11 has the drain connected in the node of connection between the inductance Lpfc and the diode Dpfc, the source connected to a resistance Rlim, in turn connected to ground. A voltage divider composed of resistances R1 and R2 is applied between the voltage Vout and ground.

The switching power supply comprises a power factor corrector 12, which receives in input the voltage present in the connection node between the resistance R1 and the resistance R2. It receives the voltage present on the inductance Lpfc detected by means of a winding Av, wound on the inductance Lpfc itself; the voltage on the winding Av is supplied to the power factor corrector 12 by means of a resistance Rzcd. It also receives the voltage present on the resistance Rlim.

It supplies in output the driver signal of the transistor 11.

The voltage on the winding Av, supplied to the power factor corrector 12 by means of a resistance Rzcd, is applied to a circuit 22 for detecting the crossing of zero, whose output is connected to an input of the circuit OR 13, the output of a start-up circuit 14 is connected to the other input of the circuit OR 13. The output of the circuit OR 13 is connected to the input S of a flip flop 14.

The voltage present on the resistance Rlim is applied to the inverting input of a comparator 15, a reference voltage Vref3 is applied to the non-inverting input of the comparator 15 . The output of the comparator 15 is connected to a first circuit input OR 16 (with three inputs).

The output Q of the flip flop 14 is connected to a driver circuit 17, which supplies the driver signal of the gate of the transistor 11, said output is also connected to the input of a sweep generator 20.

The voltage present at the connection node between the resistance R1 and the resistance R2 is applied to the inverting input of a transconductance amplifier 18, and to the inverting input of a comparator 21.

A reference voltage Vref2 is applied to the non-inverting input of the comparator 21. The output of the comparator 21 is connected to the second circuit input OR 16.

The output of the transconductance amplifier 18 is connected to the non-inverting input of a comparator 19, and to the leads of a trimmer capacitor Ccpfc. The output of the comparator 19 is connected to the third circuit input OR 16. The output of the circuit OR 16 is connected to the input R of the flip flop 14. The output of the sweep generator 20 is connected to the inverting input of the comparator 19.

A reference voltage Vref1 is applied to the non-inverting input of the transconductance amplifier 18. A resistance Rint is connected between the non-inverting input and the inverting input of the transconductance amplifier 18 .

The comparator 15 is used as loop control. The sweep generator 20 serves to determine the instants of activation of the circuit. The transconductance amplifier 18 and the comparators 19 and 21 are used as feedback of the output voltage and as protection of the output overvoltages.

The reference voltage Vref1 is used for the regulation of the output voltage Vout. The reference voltage Vref2 is used to avoid overvoltages of the output voltage Vout. The reference voltage Vref3 is used as current limiter of the transistor 11.

Under normal operating conditions the control loop sets the voltage at the inverting node of the transconductance amplifier 18 at the value Vref1 and the output voltage Vout of the power factor corrector is worth Vo. In this case we have:${\text{I}}_{\text{R1}} {\text{= I}}_{\text{R2}} \text{=} \frac{\text{Vref} \text{1}}{\text{R} \text{2}} \text{=} \frac{\text{Vo - Vref} \text{1}}{\text{R} \text{1}}$${\text{I}}_{\text{Rint}} \text{= 0}$

In presence of overvoltages at the output node of the power factor corrector, when Vout reaches the maximum voltage allowed Vo + ΔVₘₐₓ, the inverting input is at a value equal to Vref2; summing up the currents at the node the following can be written:${\text{I}}_{\text{R1}} {\text{= I}}_{\text{R2}} {\text{+ I}}_{\text{Rint}}$$\frac{\text{Vo} \text{-} \text{Vref} \text{2 + Δ} {\text{V}}_{\text{max}}}{\text{R} \text{1}} \text{=} \frac{\text{Vref} \text{2}}{\text{R} \text{2}} \text{+} \frac{\text{Vref} \text{1 -} \text{Vref} \text{2}}{\text{R} \text{int}}$

Only taking into consideration the signal components we have:$\frac{\text{Δ} {\text{V}}_{\text{max}} \text{-} \text{ΔVref}}{\text{R} \text{1}} \text{=} \frac{\text{Δ} \text{Vref}}{\text{R} \text{2}} \text{+} \frac{\text{Δ} \text{Vref}}{\text{R} \text{int}}$ having indicated with ΔV_{ref}:$\text{Δ} \text{Vref} \text{=} \text{Vref} \text{2 -} \text{Vref} \text{1}$

Then neglecting ΔV_{ref} in regard to ΔVₘₐₓ we have:$\frac{\text{Δ} {\text{V}}_{\text{max}}}{\text{R} \text{1}} \text{=} \frac{\text{Δ} \text{Vref}}{\text{R} \text{2}} \text{+} \frac{\text{Δ} \text{Vref}}{\text{R} \text{int}}$$\text{Δ} {\text{V}}_{\text{max}} \text{= Δ} \text{Vref} \text{·} \frac{\text{R} \text{1}}{\text{R} \text{2}} \text{+ Δ} \text{Vref} \text{·} \frac{\text{R} \text{1}}{\text{R} \text{int}}$

In this case, with the reference voltages Vref1 and Vref2 internally preset, the ratio R1/R2 is defined in function of the voltage Vo supplied by the power factor corrector under normal operating conditions.

With this solution the intervention voltage of the protection circuit can be programmed by selecting suitably the ratio R1/Rᵢₙₜ. on the basis of the needs.

The solution that adopts the integrated resistance Rᵢₙₜ is definitely the most simple. Nevertheless, as V=RI =(1/gm)*I the same function could be implemented using a transconductance amplifier instead of the resistance, which carries out the same function.

The basic concept to guarantee the programmability is that in presence of overvoltages, a part of the "signal" current coming from R1 and directed in R2 is absorbed inside the device.

Making a numeric example in the case of using a resistance Rint, and setting Vo=400V, Vref1=2.5V, Vref2=2.6V, Rint=4.16KΩ, and consequently R1/R2=160, we would have:$\text{Δ} {\text{V}}_{\text{max}} \text{= 0.1} \text{V} \text{· 160 + 0.1} \text{V} \frac{\text{R} \text{1}}{\text{R} \text{int}}$$\text{Δ} {\text{V}}_{\text{max}} \text{= 16} \text{V} \text{+ 0.1} \text{V} \frac{\text{R} \text{1}}{\text{R} \text{int}}$

For example, wanting to program ΔVₘₐₓ=40V from the previous equation we would obtain R1=1MΩ and then we could calculate R2=R1/160=6.25KΩ.

Preferably all the circuits described relating to the power factor corrector 12 (possibly with the exception of the capacitor Ccpfc) are contained in one integrated circuit with 8 pin.

## Claims

1. Circuit for the programmable protection of output overvoltages in a power factor corrector comprising
means (R1, R2) for detecting a signal proportional to the output voltage;
a first preset reference voltage (Vref1);
a second preset reference voltage (Vref2);
a transconductance amplifier (18) which receives in input said signal proportional to the output voltage and said first preset reference voltage (Vref1);
a comparator (21) which receives in input said signal proportional to the output voltage and said second preset reference voltage (Vref2);
means (Rint) suitable for absorbing a current coming from said signal proportional to the output voltage.

2. Circuit in accordance with claim 1 **characterized in that** said means (Rint) suitable for absorbing a current coming from said signal proportional to the output voltage are coupled between the inputs of said transconductance amplifier (18).

3. Circuit in accordance with claim 1 **characterized in that** said means (Rint) suitable for absorbing a current coming from said signal proportional to the output voltage comprise a resistance (Rint).

4. Circuit in accordance with claim 1 **characterized in that** said means (Rint) suitable for absorbing a current coming from said signal proportional to the output voltage comprise a transconductance amplifier.

5. Power factor corrector integrated circuit comprising a circuit for the programmable protection of output overvoltages in accordance with claim 1.
